Europäisches Patentamt

European Patent Office

Office européen des brevets

(11) Publication number: **0 079 808**
**B1**

(12) **EUROPEAN PATENT SPECIFICATION**

(45) Date of publication of patent specification: **12.03.86**

(51) Int. Cl.⁴: **D 04 H 1/42, D 04 H 1/46**

(21) Application number: **82306130.4**

(22) Date of filing: **17.11.82**

(54) Heat resistant pads.

(30) Priority: **18.11.81 JP 170711/81 u**

(43) Date of publication of application:
**25.05.83 Bulletin 83/21**

(45) Publication of the grant of the patent:
**12.03.86 Bulletin 86/11**

(84) Designated Contracting States:
**DE FR GB**

(56) References cited:
**FR-A-2 168 897**
**US-A-3 265 557**

(73) Proprietor: **ICHIKAWA WOOLEN TEXTILE CO.,LTD.**
**14-15, Hongo 2-chome Bunkyo-ku**
**Tokyo 113 (JP)**

(72) Inventor: **Awano, Shunya**
**1448-1 Sendabori**
**Matsudo-shi Chiba-ken (JP)**
Inventor: **Koseki, Kazusuke**
**1-14-11, Shintomi-cho**
**Kashiwa-shi Chiba-ken (JP)**
Inventor: **Nishida, Masanori**
**A405 Yatsuyuen-haitsu 3-29-1, Yatsu**
**Narashino-shi Chiba-Ken (JP)**

(74) Representative: **Howden, Christopher Andrew et al**
**FORRESTER & BOEHMERT Widenmayerstrasse 4/I**
**D-8000 München 22 (DE)**

EP 0 079 808 B1

Courier Press, Leamington Spa, England.

# Description

This invention concerns a heat resistant pad for use with a cooling table or a spacer in extrusion forming processes, for example in the fields of non-ferrous metal industries, such as for aluminium, or in heat treatment processes in ceramic industries or the like.

More specifically, it relates to a felt-structured heat resistant pad suitable for use with the rear facilities of an aluminium extrusion pressing machine, such as a canister, initial table, run-out table, lift arm and cooling table.

The rear facilities of an aluminium extrusion pressing machine are used for receiving or transporting the extruded products at high temperatures (550—600°C). Heat resistant pads for use with such facilities desirably satisfy the following performance requirements:

(1) capability of withstanding high temperature of about 600°C;

(2) should not scratch the surface of the extruded products;

(3) have adequate cushioning properties, leaving no grooved traces, which are often caused by the extruded products;

(4) adequate friction coefficient so as to avoid excess slipping of the extruded products in transport;

(5) low heat conductivity;

(6) reduced hygroscopic properties;

(7) no generation of decomposed gases nor deposition to the extruded product through melting; and

(8) sufficient wear resistance and impact resistance property under high temperature conditions.

Conventionally, heat resistant pads have been made as plates of synthetic or natural carbon, woven fabrics of asbestos or glass fibres, or as plates of Teflon resin. However, there conventional pads are associated with the following disadvantages:

(a) Heat Resistant Pads Made of Plates
of Synthetic or Natural Carbon

Such pads have low wear resistivity and tend to be prone to grooved traces at the surface thereof caused by contract with the extruded products. Succeeding extruded products are often caught by such traces and damaged. Further, since they have high heat conductivity, the temperature of the extruded products under cooling differs according to the portions thereof that came into contact with the surfaces of the pad, which may result in an alteration of the crystal structure of the extruded product (aluminium). Consequently, the use of such pads may cause remarkable dimensional errors, formation of pits in the rapidly cooled portions of the extruded products (depending on their cross sectional profile), or may result in clouding and so-called black spots or white spots in any subsequent surface treatment or like other steps. Furthermore, since such pads have an insufficient frictional coefficient, extruded products can not easily be transported due to excess slip, for example, when the pads are used in a lift arm or a cooling table.

(b) Heat Resistant Pads Made of Woven Fabrics
of Asbestos or Glass Fibres

While such pads are usually woven into cloth and appended on a metallic core material in use, they lack flexibility and tend to damage the extruded products. Further, they are liable to be damaged by the impact applied from the edges or the likes of the extruded products, and the pad body inevitably scatters as powdery dusts polluting the working atmosphere.

(c) Heat Resistant Pads Made of Teflon Resin

As in (a) above, such pads have poor wear resistivity which often leads to damage of the pad by the extruded products. Also the insufficient frictional coefficient of such pads causes problems in the transportation of extruded products. Furthermore, the resin may possibly melt and be deposited on the extruded products.

A heat resistant felt, comprising a mixture of carbon fibers and aromatic polyamide fibers bonded together using a bonding agent (such as an ABS resin) and latex is described in FR—A—2168897. However, a pad made of such a material would be usable only in temperatures up to about 200°C, above which the bonding resin tends to melt, and lack the desired flexibility.

The object of this invention is to mitigate the foregoing problems and to provide a heat resistant pad having flexibility, cushioning property, wear resistance and impact resistance coupled with an adequate frictional coefficient.

The invention provides a heat resistant pad formed substantially from carbon fibers admixed with aromatic polyamide fibers, characterised in that the pad comprises a plurality of layers of batt mixtures, substantially comprising carbon fibers admixed with aromatic polyamide fibers, which are superposed one on another and entangled to integrate into a felt-like structure by way of needle punching.

It has been found that such pads are particularly suitable for use with rear facilities of an aluminium extrusion pressing machine. In such batt mixtures the carbon fibres have excellent properties of heat-resistance, flexibility and cause no damage to extruded products. The admixed aromatic polyamide fibers also have excellent heat resistance and low heat conductivity to reduce the heat conductivity of the batt mixtures as low as possible.

Desirably, at least the surface layer of the pad body is coated and impregnated with a silicon resin heat resistant paint.

The provision of at least a surface layer of a silicone resin heat resistant paint improves wear resistance and impact resistance while maintaining the initial form of the pad body to elongate the service life of the pad.

In order that the invention may be more readily understood, and so that further features thereof may be appreciated, embodiments of the invention will now be described, by way of example, and with reference to the accompanying drawings, in which:

Figure 1 is a cross-sectional view of part of a heat resistant pad in accordance with one embodiment of this invention in which needle punching is illustrated diagrammatically;

Figure 2 is a cross-sectional view similar to Figure 1 of another embodiment of this invention, wherein a heat resistant paint is coated on and impregnated into the surface layer of the pad;

Figure 3 is a cross-sectional view similar to Figure 1, in which the mixing ratio of the batt mixture has been varied;

Figures 4A, 4B, 4C and 4D show various further embodiments in cross-section wherein a foundation fabric is interposed with and/or attached to the pad;

Figures 5A, 5B, 5C and 5D show various further embodiments in cross-section wherein a batt solely consisting of aromatic polyamide fibers is interposed with and/or attached to the pad; and

Figures 6A, 6B, 6C and 6D show various further embodiments in cross-section wherein a foundation fabric and aromatic polyamide fiber batt joined to each other in layers is interposed with and/or attached to the pad.

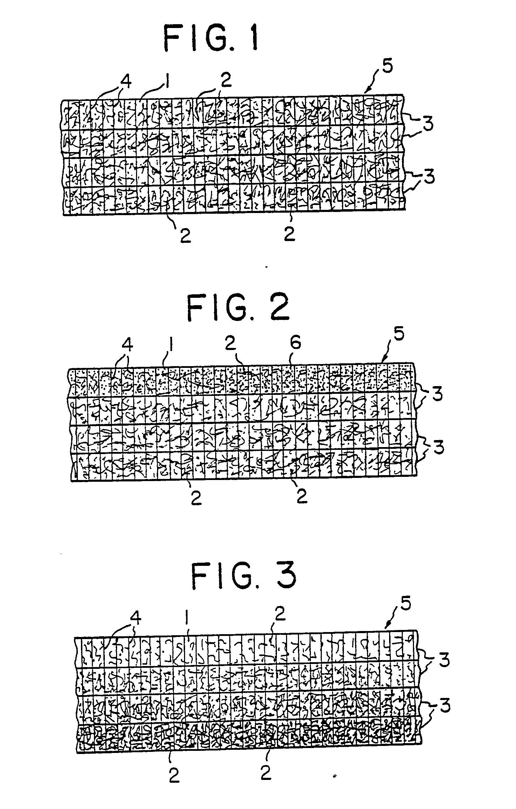

As shown in Figure 1 a heat resistant pad comprises a pad body 5 formed of batt mixtures 3 that substantially comprise carbon fibers 1 admixed with aromatic polyamide fibers 2. The batt mixtures 3 are superposed into a plurality of layers and are entangled to integrate into a felt-like structure by way of needle punching 4.

For the convenience of illustration, the carbon fibres 1 are shown in the drawings by the blank area, the aromatic polyamide fibers 2 by wavy solid lines and the needle punching 4 by parallel vertical lines.

Admixing the carbon fibers 1 with the aromatic polyamide fibers 2 has been found to compensate for the defective abrasion resistance and heat conductivity properties, and the easily damaging nature, of the carbon fibers, as well as to enhance the entanglement of the fibers in the course of the needle punching. Accordingly, it is desired to set the mixing ratio of the carbon fibers 1 to the aromatic polyamide fibers 2 within a range of 8—6 : 2—4 and, particularly, at a ratio of 7 : 3. If the mixing ratio of aromatic polyamide fibers is below the specified range, the foregoing benefits cannot be satisfied. While on the other hand, if the mixing ratio exceeds the specified range, the heat resistance of the pad body 5 per se is reduced, because the upper limit of the heat resistivity for the aromatic polyamide fibers is from 200 to 300°C, which is significantly lower than the heat resistant temperature required for the pad body 5.

Suitable aromatic polyamide fibers, as referred to above, include "methaphenylene isophthalamide", commercially available under the tradenames "CONEX" and "NOMEX", and "methaphenylene terephthalamide" commercially available under the tradename "KEVLAR".

In the batt mixtures 3 subjected to the needle punching 4, the carbon fibers 1 and the aromatic polyamide fibers 2 are entangled to each other in every directions in each of the layers as well as between the layers, and the fibers are oriented in the direction of the punching. This means that the strength of the pad, for example against the frictional contact with aluminium extruded products (not shown), can further be increased.

The pad body 5 preferably has a density of from 0.25 to 0.6 g/cm$^3$ after the needle punching. In other words, when the thickness of the pad body is between 7 to 12 mm, it is desirous that the weight of the pad body is between 3000 to 4000 g/m$^2$. If the density exceeds the specified range, the pad lacks in flexibility and tends to damage the extruded products, and the heat conductivity of the pad is increased. On the other hand, if the density is lower than the specified range, the toughness is lost, whereby the pad is liable to be damaged by the extruded products, and the wear resistivity is reduced.

Figure 2 shows one example of a pad body 5 comprising batt mixtures 3 consisting of carbon fibers 1 admixed with aromatic polyamide fibers 2, which are superposed into a plurality of layers and entangled to integrate into a felt-like structure by way of needle punching 4 to form a pad body 5, and in which at least the surface layer of the pad body 5 is coated and impregnated with a silicone resin heat resistant paint 6 (represented in the drawing by fine dots).

The silicone resin heat resistant paint 6 applied for the coating and impregnation of pad body 5 may comprise a silicone resin solely or a mixture consisting essentially of silicone resin and heat resistant reinforcing material such as carbon, graphite or metal oxide admixed thereto, which is dispersed and mixed in a solvent such as xylene. The coating film formed from such a paint has an excellent heat resistance temperature (as high as 600—800°C) and the coating on the constituent fibers of the heat resistant pad with the paint film can advantageously increase the wear resistivity and impact resistance of the heat resistant pad while maintaining the heat resistance of the carbon fibers.

The paint may be coated and impregnated by way of any conventional means such as spraying, impregnation, brush coating and roller coating. If desired, the heat resistant pads may be coated only on the surface that contacts the extruded products, or the side surfaces may also be coated, or the entire surface may be coated and, depending on the case, differing degrees of the pad may be impregnated. In any case, it is important to control the coating amount so as not to impair the flexibility and cushioning properties of the pad. Preferably, the amount of silicone resin is such that the solid matter remaining after a volatilization is from 3 to 15 wt% of the weight of the pad body to be coated. Having been applied to the pad, the paint is cured, after drying. Preferably, the curing is carried out at 180—200°C for about 30—40 min.

Heat resistant pads according to the invention can be fabricated, for use, into various configurations, such as: plates, conveyor belts, tubes and rolls, depending upon the desired application part and purpose. For example the resistant pad may be fabricated to be incorporated in a canister, initial table, run-out table, lift-arm, cooling table or the like of an aluminium extrusion pressing machine.

Figure 3 shows one sample of a pad body in which layers of batt mixtures 3 are superposed one on another in such a way that the mixing ratio of the aromatic polyamide fibers 2 admixed to the carbon fibers 1 in the layers is increased stepwise from the surface layer to the lower layer. In this case, while the mixing ratio has to be within the range specified above at least in the uppermost layer, the mixing ratio may be reversed, that is, the amount of the aromatic polyamide fibers may be greater than that of the carbon fibers toward the lower layer. This arrangement has been found to be effective for reducing the heat conductivity of the pad.

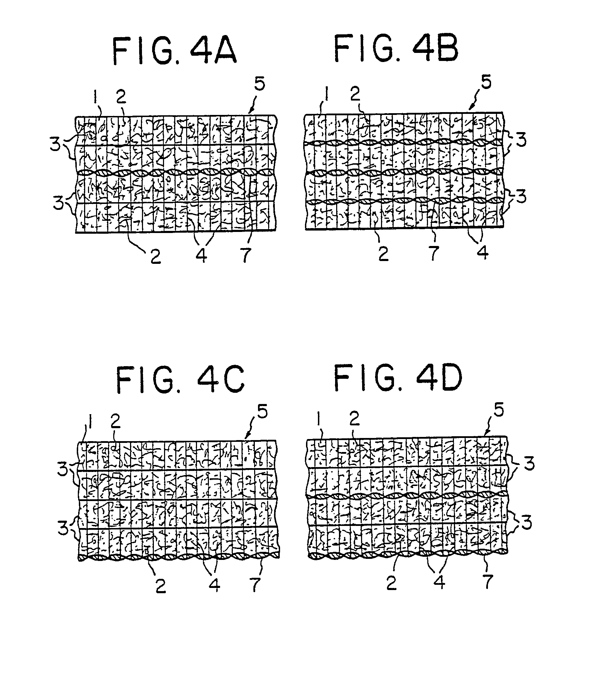

Figures 4A, 4B, 4C and 4D show various embodiments of heat resistant pads in accordance with the invention, in which at least one heat resistant foundation fabric 7 is interposed between the layers of the batt mixtures, or appended to the bottom surface of the lowermost layer of the batt mixtures 3. The material used for the foundation fabric 7 may be carbon fibers, aromatic polyamide fibers, glass fibers, or may be a mixture of fibers so long as the fibers are heat resistant, with aromatic polyamide fibers being most preferred in view of their strength. Interposition or attachment of the foundation fabric 7 is effective to increase the strength of the pad body 5.

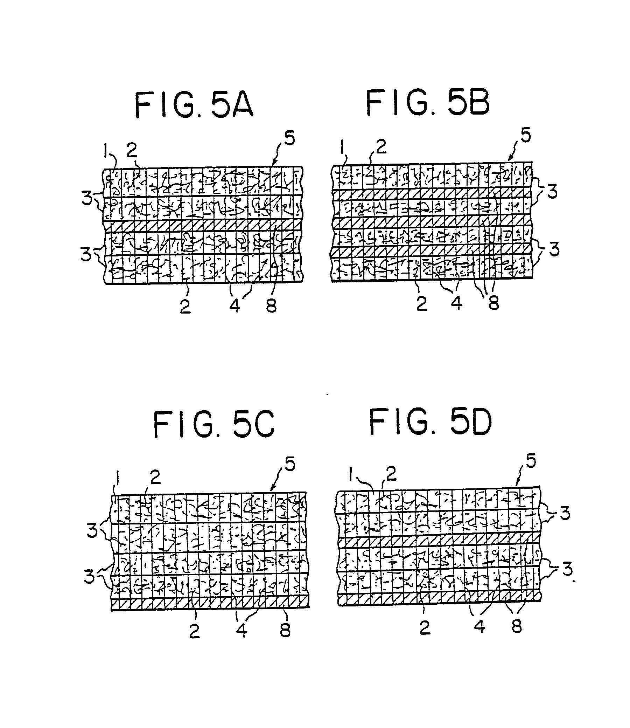

Figures 5A, 5B, 5C and 5D show various other embodiments of heat resistant pads in accordance with the invention, in which at least one batt layer solely consisting of aromatic polyamide fibers 8 (represented by oblique lines in the drawings) is interposed between the layers of the batt mixtures, and/or appended to the bottom surface of the lowermost layer of the batt mixtures 3. This is effective for reducing the heat conductivity of pad body 5 and reinforcing the strength of batt mixtures.

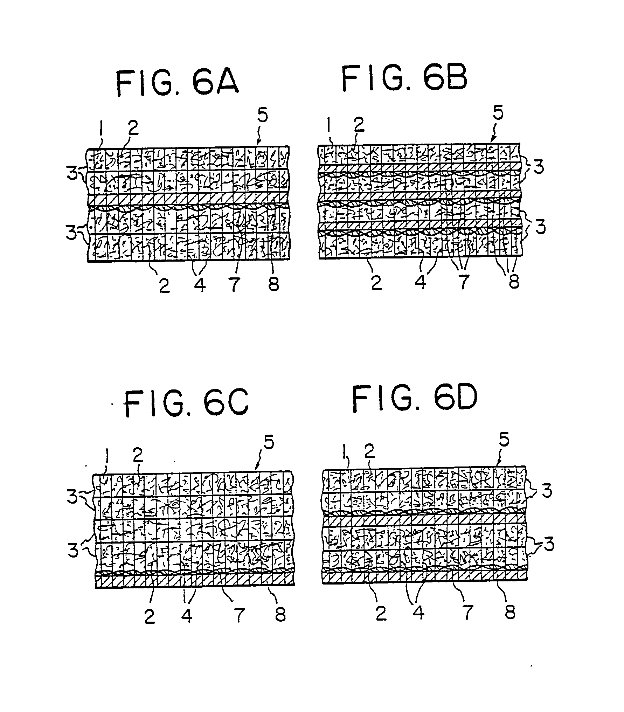

Figures 6A, 6B, 6C and 6D show various further embodiments of heat resistant pads in accordance with the invention, in which at least one combination layer, comprising a heat resistant foundation fabric 7 and a batt layer solely consisting of aromatic polyamide fibers 8 joined to each other in layers, is interposed between the layers of the batt mixtures and/or appended to the bottom surface of the lowermost layer of the batt mixtures 3. It has been found that such arrangements yield both the advantages of an increase in the strength of the pad body 5 and a reduction in the heat conductivity of the pad.

For ease of illustration, silicone resin coating and impregnation of the heat resistant pads shown in Figures 3 to 6 has not been illustrated.

However, it will be appreciated that when a silicon resin heat resistant paint is coated and impregnated, improved wear resistance and impact resistance to protect the pad body can be obtained.

Since the pad body comprises essentially carbon fibers, it can well withstand the high temperature of aluminium extruded products (550—600°C) which have just been extruded from a die onto the initial table or the run-out table. Further, since aromatic polyamide of low heat conductivity is admixed with carbon fibers and they are needle-punched into a felt-like structure, the heat conductivity of the pad can be maintained low irrespective of the use of the carbon fibers. It has been found that using heat resistant pads in accordance with this invention as the receiving surface for hot formed extrusions, no difference in the temperature, upon cooling, between the portions of extruded products occurs, irrespective of contact between portions of the aluminium extruded products and the pads. Thus, as compared with conventional carbon plates, improvements in the quality of the extruded products can be expected, and a heat resistant pad having improved wear resistivity and therefore prolonged service life is provided.

Further, since the felt-like structure is obtained by needle punching the layers of the batt mixtures essentially consisting of carbon fibers admixed with aromatic polyamide fibers, the heat resistant pad of this invention possesses adequate flexibility and cushioning properties, with the avoidance of scratches to the extruded products and grooved traces on the pad caused by the extruded products that have been noted in conventional carbon plates. In addition, since the pad of the invention has an adequate frictional coefficient, it can effectively transport the extruded products when used in a lift arm or a cooling table.

Furthermore, since the pad according to this invention comprises a fiber assembly, it has been found to be free from the troubles such as cracking or chipping due to the impact and heat of the extruded products and can thus be used stably for long periods.

Moreover, silicone resin coating and impregnation has been found to be effective to strengthen the pad body in wear resistance and impact resistance while still providing adequate flexibility, cushioning properties, frictional coefficient as well as the initial form of the pad body, thus further elongates the service life of the pad.

**Claims**

1. A heat resistant pad formed substantially from carbon fibers admixed with aromatic polyamide fibers, characterised in that the pad comprises a plurality of layers of batt mixtures, substantially comprising carbon fibers admixed with aromatic polyamide fibers, which are superposed one on another and entangled to integrate into a felt-like structure by way of needle punching.

2. A heat resistant pad according to claim 1, wherein at least a surface layer of the pad body is coated and impregnated with a silicone resin heat resistant paint.

3. A heat resistant pad according to claim 1 or claim 2, wherein at least in a surface layer the ratio of carbon fibers to aromatic polyamide fibers is in the range 8 to 6 : 2 to 4.

4. A heat resistant pad according to claim 3, wherein the ratio of carbon fibers to aromatic polyamide fibers is 7 : 3.

5. A heat resistant pad according to claim 1 or 2, wherein the mixing ratio of the aromatic polyamide fibers to the carbon fibers is increased stepwise from the surface layer to a lower layer.

6. A heat resistant pad according to any one of claims 1 to 5, wherein at least one heat resistant foundation fabric is interposed between the layers of the batt mixtures, and/or is appended to the bottom surface of the lowermost layer of the batt mixtures.

7. A heat resistant pad according to any one of claims 1 to 5, wherein at least one batt layer solely consisting of the aromatic polyamide fibers is interposed between the layers of the batt mixtures, and/or is appended to the bottom surface of the lowermost layer of the batt mixtures.

8. A heat resistant pad according to any one of claims 1 to 5, wherein at least one set of a heat resistant foundation fabric and a batt layer solely consisting of aromatic polyamide fibers joined to each other in layers, is interposed between the layers of the batt mixtures, and/or is appended to the bottom surface of the lowermost layer of the batt mixtures.

### Patentansprüche

1. Hitzebeständiges Polster, welches hauptsächlich aus Kohlenstoffasern, gemischt mit Fasern aus aromatischem Polyamid, besteht, dadurch gekennzeichnet, daß das Polster mehrere Schichten von Füllmischungen aufweist, die hauptsächlich Kohlenstoffasern, gemischt mit Fasern aus aromatischem Polyamid, aufweisen, eins über das andere aufeinandergelegt und durch Vernadelung zu einer einheitlichen filzähnlichen Struktur verflochten sind.

2. Hitzebeständiges Polster nach Anspruch 1, wobei wenigstens eine Oberflächenschicht des Polsterkörpers mit einer hitzebeständigen Silikonharzfarbe beschichtet und imprägniert ist.

3. Hitzebeständiges Polster nach Anspruch 1 oder Anspruch 2, wobei in wenigstens einer Oberflächenschicht das Verhältnis von Kohlenstoffasern zu Fasern aus aromatischem Polyamid im Bereich von 8 bis 6 : 2 bis 4 liegt.

4. Hitzebeständiges Polster nach Anspruch 3, wobei das Verhältnis von Kohlenstoffasern zu Fasern aus aromatischem Polyamid 7 : 3 ist.

5. Hitzebeständiges Polster nach Anspruch 1 oder 2, wobei das Mischungsverhältnis von den Fasern aus aromatischem Polyamid zu den Kohlenstoffasern von der Oberflächenschicht zu einer unteren Schicht schrittweise ansteigt.

6. Hitzebeständiges Polster nach einem der Ansprüche 1 bis 5, wobei wenigstens ein hitzebeständiges Grundgewebe zwischen die Schichten der Füllmischungen gelegt und/oder auf der Unterseite der untersten Schicht der Füllmischungen angebracht ist.

7. Hitzebeständiges Polster nach einem der Ansprüche 1 bis 5, wobei wenigstens eine Füllschicht, die nur aus Fasern aus aromatischem Polyamid besteht, zwischen die Schichten der Füllmischungen gelegt und/oder auf der Unterseite der untersten Schicht der Füllmischungen angebracht ist.

8. Hitzebeständiges Polster nach einem der Ansprüche 1 bis 5, wobei wenigstens ein Satz aus einem hitzebeständigen Grundgewebe und einer Füllschicht, die nur aus Fasern aus aromatischem Polyamid besteht, wobei beides miteinander zu Schichten verbunden ist, zwischen die Schichten der Füllmischungen gelegt und/oder auf der Unterseite der untersten Schicht der Füllmischungen angebracht ist.

### Revendications

1. Nappe résistant à la chaleur constituée essentiellement de fibres de carbone mélangées à des fibres de polyamide aromatique, caractérisée en ce que cette nappe comprend plusieurs couches de mélanges de feutres comportant essentiellement des fibres de carbone mélangées à des fibres de polyamide aromatique, qui sont superposées l'une sur l'autre et enchevêtrées pour se fondre selon une structure analogue à du feutre par aiguilletage.

2. Nappe résistant à la chaleur selon la revendication 1, où au moins une couche de surface du corps de nappe est revêtue et imprégnée avec une peinture résistant à la chaleur en résine au silicone.

3. Nappe résistant à la chaleur selon la revendication 1 ou la revendication 2, où au moins dans une couche de surface le rapport des fibres de carbone aux fibres de polyamide aromatique se situe dans la fourchette 8 à 6 : 2 à 4.

4. Nappe résistant à la chaleur selon la revendication 3, où le rapport fibres de carbone à fibres de polyamide aromatique est de 7 : 3.

5. Nappe résistant à la chaleur selon la revendication 1 ou 2, où la proportion de fibres de polyamide aromatique par rapport aux fibres de carbone s'accroît graduellement de la couche de surface vers une couche inférieure.

6. Nappe résistant à la chaleur selon l'une quelconque des revendications 1 à 5, où au moins un tissu de base résistant à la chaleur est interposé entre les couches de mélanges de feutres et/ou est lié à la surface du fond de la couche la plus basse des mélanges de feutres.

7. Nappe résistant à la chaleur selon l'une quelconque des revendications 1 à 5, où au moins une couche de feutres constituée exclusivement de fibres de polyamide aromatique est interposée entre les couches de mélanges de feutres et/ou liée à la surface du fond de la couche la plus basse de mélanges de feutres.

8. Nappe résistant à la chaleur selon l'une quelconque des revendications 1 à 5, où au moins un ensemble d'un tissu de base résistant à la chaleur et d'une couche de feutre constituée exclusivement de polyamide aromatique joints les uns aux autres en couches, est interposé entre les couches de mélanges de feutres et/ou est lié à la surface du fond de la couche la plus basse des mélanges de feutres.

# FIG. 1

# FIG. 2

# FIG. 3

## FIG. 4A

## FIG. 4B

## FIG. 4C

## FIG. 4D

0 079 808

## FIG. 5A

## FIG. 5B

## FIG. 5C

## FIG. 5D

3

# FIG. 6A

# FIG. 6B

# FIG. 6C

# FIG. 6D